# EUROPEAN PATENT SPECIFICATION

(11) **EP 4 507 135 B1**
(45) Date of publication and mention of the grant of the patent: **08.04.2026**
(21) Application number: 24193122.9
(22) Date of filing: 06.08.2024
(51) Int. Cl.: H01R 13/64, H05K 13/06, H01R 3/00, H01R 43/20, H05K 13/00, B30B 7/04

(54) **CONNECTOR FIXTURE AND CONNECTOR DETECTION SYSTEM**
VERBINDERBEFESTIGUNG UND VERBINDERDETEKTIONSSYSTEM
FIXATION DE CONNECTEUR ET SYSTÈME DE DÉTECTION DE CONNECTEUR

(30) Priority: 09.08.2023 CN 202311001514
(43) Date of publication of application: 12.02.2025
(73) Proprietor: Tyco Electronics (Shanghai) Co., Ltd., Pilot Free Trade Zone Shanghai 200131 (CN)
(72) Inventor: Zhang, Lijiong, Shanghai, 200233 (CN); Yang, Jianguo, Shanghai, 200233 (CN); Li, Chunlong, Shanghai, 200233 (CN)
(74) Representative: Grünecker Patent- und Rechtsanwälte PartG mbB

(56) References cited:
- WO-A1-2020/249574
- US-A1- 2016 256 914
- US-A1- 2018 241 168

## Description

### CROSS-REFERENCE TO RELATED APPLICATION

This application claims the benefit of Chinese Patent Application No. CN202311001514.4 filed on August 9, 2023 in the State Intellectual Property Office of China.

### BACKGROUND OF THE INVENTION

### Field of the Invention

The present invention relates to a connector fixture and a connector detection system comprising the connector fixture.

### Description of the Related Art

In the prior art, in order to detect the insertion depth of the connector terminals, an observation window is usually formed on the connector housing, through which the camera can capture the terminals located inside the housing, and thus calculate the insertion depth of the terminals based on the captured terminal images. To ensure that the connector remains stationary during shooting, it is necessary to clamp the connector onto the connector fixture and ensure that the observation window on the connector faces the camera.

In the prior art, it is common to manually place and control the placement angle of the connector so that the observation window on the connector faces the camera. Due to the small size of the connector, it is often not possible to manually place the angle of the connector in place at once, resulting in the camera not being able to capture the terminals. Multiple attempts are needed to repeatedly adjust the placement angle of the connector, which seriously reduces detection efficiency and quality. Document US 2016/256914 A1 discloses a connector fixture according to the prior art.

### SUMMARY OF THE INVENTION

The present invention has been made to overcome or alleviate at least one aspect of the above mentioned disadvantages.

According to an aspect of the present invention, there is provided a connector fixture according to claim 1. The connector fixture comprises of: a fixed seat; a rotating shaft which passes through the fixed seat and is rotatably installed on the fixed seat; an installation block which is fixed to one end face of the rotating shaft and formed with multiple radial sliding slots spaced in a circumferential direction; multiple clamping claws which are respectively slidably installed in multiple radial sliding slots of the installation block; a transmission component which is sleeved on the rotating shaft and can be moved axially relative to the rotating shaft; and a driving member which is sleeved on the transmission component and is used to drive the transmission component to axially move. The transmission component has an installation hole, one end of the rotating shaft is inserted into the installation hole, and multiple grooves are formed on the inner wall surface of the installation hole, one ends of the multiple clamping jaws are respectively accommodated in the multiple grooves. A first inclined plane is formed on one end of the clamping claw, and a second inclined plane is formed on the inner side of the groove and is mated with the first inclined plane to convert an axial movement of the transmission component into a radial movement of multiple clamping claws to clamp a connector by the multiple clamping claws.

According to another exemplary embodiment of the present invention, four radial sliding slots are formed on the installation block, and the four radial sliding slots are evenly spaced in the circumferential direction, so that the four radial sliding slots are in a cross shape; the connector fixture comprises four clamping claws which are respectively slidably installed in the four radial sliding slots for radially clamping the connector.

According to another exemplary embodiment of the present invention, a central through-hole is formed in the rotating shaft and the installation block to allow the cable of the connector to pass through, the other ends of the multiple clamping jaws surround the central through-hole and are adjacent to each other, for radially clamping the cable of the connector.

According to another exemplary embodiment of the present invention, the transmission component can be moved between a first position and a second position along the axial direction of the rotating shaft under the drive of the driving member; when the transmission component is moved to the first position, the multiple clamping claws are driven to an opened position of releasing the cable; when the transmission component is moved to the second position, the multiple clamping jaws are driven to a clamping position for clamping the cable.

According to another exemplary embodiment of the present invention, the connector fixture further comprises an elastic element which is compressed between the clamping claw and the installation block to radially push the clamping claw towards the second inclined plane, so that the first inclined plane and the second inclined plane remain in contact with each other.

According to another exemplary embodiment of the present invention, a blind hole is formed in the installation block, one end of the elastic element is accommodated in the blind hole, the other end of the elastic element is pressed against one end of the clamping claw.

According to another exemplary embodiment of the present invention, the transmission component is rotationally connected to the driving member to allow the transmission component to rotate relative to the driving member.

According to another exemplary embodiment of the present invention, the transmission component comprises: a sleeve member which is fitted onto one end of the rotating shaft; a ring member connected to one end face of the sleeve member; and a washer member which is fitted onto one end of the sleeve member. A limiting flange is formed on the other end of the sleeve member, and the driving member is sleeved on the sleeve member and axially limited between the washer member and the limiting flange, and the sleeve member can be rotated relative to the driving member.

According to another exemplary embodiment of the present invention, the connector fixture further comprises a driver which is installed on the fixed seat and connected to the driving member, for driving the driving member to axially move and driving the transmission component to axially move through the driving member.

According to another exemplary embodiment of the present invention, the driver is a cylinder, and the cylinder body of the cylinder is fixed on the fixed seat, the telescopic rod of the cylinder is connected to the driving member.

According to another exemplary embodiment of the present invention, the connector fixture further comprises a driving device which is installed on the fixed seat and connected to the other end of the rotating shaft, for driving the rotating shaft, the installation block, the clamping claws, and the transmission component to rotate synchronously.

According to another exemplary embodiment of the present invention, the driving device comprises of: a motor; and a transmission mechanism which is connected between the rotating shaft and the output shaft of the motor.

According to another exemplary embodiment of the present invention, the transmission mechanism is a gear transmission mechanism, and the gear transmission mechanism comprises of: a first gear fixed to the other end of the rotating shaft; and a second gear fixed to the output shaft of the motor, the first gear is meshed with the second gear.

According to another aspect of the present invention, there is provided a connector detection system. The connector detection system comprises: the above connector fixture for clamping a cable of a detected connector; a first camera for capturing an observation window on the housing of the detected connector; a second camera for capturing a terminal located inside the housing through the observation window; a calculation device for calculating an angle between the central axis of the observation window and the optical axis of the second camera based on the image of the observation window captured by the first camera; a control device for controlling the rotating shaft of the connector fixture to rotate the angle calculated by the calculation device, so that the observation window is rotated to an orientation directly facing the second camera. When the observation window on the housing of the connector is rotated to the orientation directly facing the second camera, the second camera captures the terminal through the observation window.

According to an exemplary embodiment of the present invention, the calculation device further calculates an insertion depth of the terminal inserted into the housing based on the image captured by the second camera; when the difference between the calculated insertion depth of terminal and a predetermined insertion depth is greater than a predetermined value, the connector detection system determines that the insertion depth of terminal is unqualified; when the difference between the calculated insertion depth of terminal and the predetermined insertion depth is not greater than the predetermined value, the connector detection system determines that the insertion depth of terminal is qualified.

In the aforementioned exemplary embodiments of the present invention, the connector fixture can automatically clamp the connector and accurately rotate it to a predetermined orientation, improving the detection efficiency and quality of the connector.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative perspective view of a connector fixture according to an exemplary embodiment of the present invention when viewed from one side;
Figure 2 shows an axial sectional view of a connector fixture according to an exemplary embodiment of the present invention;
Figure 3 shows an illustrative exploded view of a connector fixture according to an exemplary embodiment of the present invention;
Figure 4 shows an illustrative perspective view of a connector fixture according to an exemplary embodiment of the present invention when viewed from the other side;
Figure 5 shows an illustrative perspective view of a driving device according to an exemplary embodiment of the present invention;
Figure 6 shows an illustrative perspective view of the first camera, second camera, and connector of a connector detection system according to an exemplary embodiment of the present invention;
Figure 7 shows an illustrative view of a second camera and connector of a connector detection system according to an exemplary embodiment of the present invention, wherein the observation window on the connector is not facing the second camera; and
Figure 8 shows an illustrative view of a second camera and connector of a connector detection system according to an exemplary embodiment of the present invention, wherein the observation window on the connector is rotated to face the second camera.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a connector fixture. The connector fixture comprises of: a fixed seat; a rotating shaft which passes through the fixed seat and is rotatably installed on the fixed seat; an installation block which is fixed to one end face of the rotating shaft and formed with multiple radial sliding slots spaced in a circumferential direction; multiple clamping claws which are respectively slidably installed in multiple radial sliding slots of the installation block; a transmission component which is sleeved on the rotating shaft and can be moved axially relative to the rotating shaft; and a driving member which is sleeved on the transmission component and is used to drive the transmission component to axially move. The transmission component has an installation hole, one end of the rotating shaft is inserted into the installation hole, and multiple grooves are formed on the inner wall surface of the installation hole, one ends of the multiple clamping jaws are respectively accommodated in the multiple grooves. A first inclined plane is formed on one end of the clamping claw, and a second inclined plane is formed on the inner side of the groove and is mated with the first inclined plane to convert an axial movement of the transmission component into a radial movement of multiple clamping claws to clamp a connector by the multiple clamping claws.

According to another general concept of the present invention, there is provided a connector detection system. The connector detection system comprises: the above connector fixture for clamping a cable of a detected connector; a first camera for capturing an observation window on the housing of the detected connector; a second camera for capturing a terminal located inside the housing through the observation window; a calculation device for calculating an angle between the central axis of the observation window and the optical axis of the second camera based on the image of the observation window captured by the first camera; a control device for controlling the rotating shaft of the connector fixture to rotate the angle calculated by the calculation device, so that the observation window is rotated to an orientation directly facing the second camera. When the observation window on the housing of the connector is rotated to the orientation directly facing the second camera, the second camera captures the terminal through the observation window.

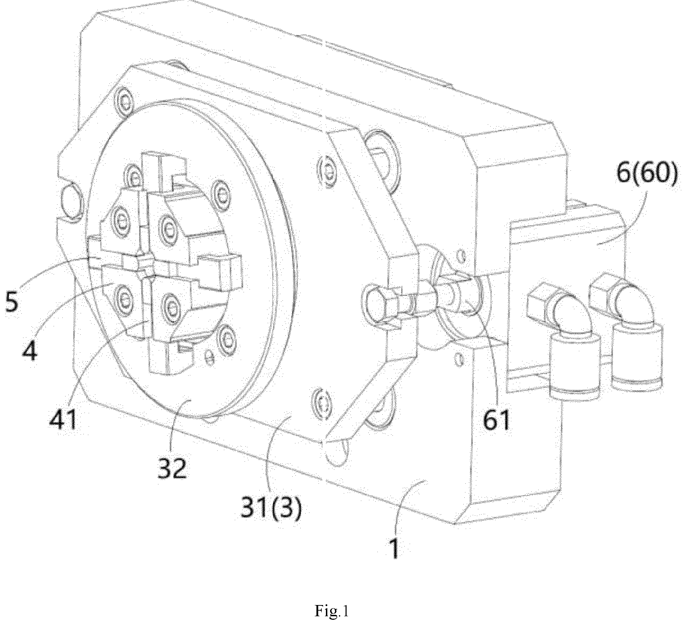

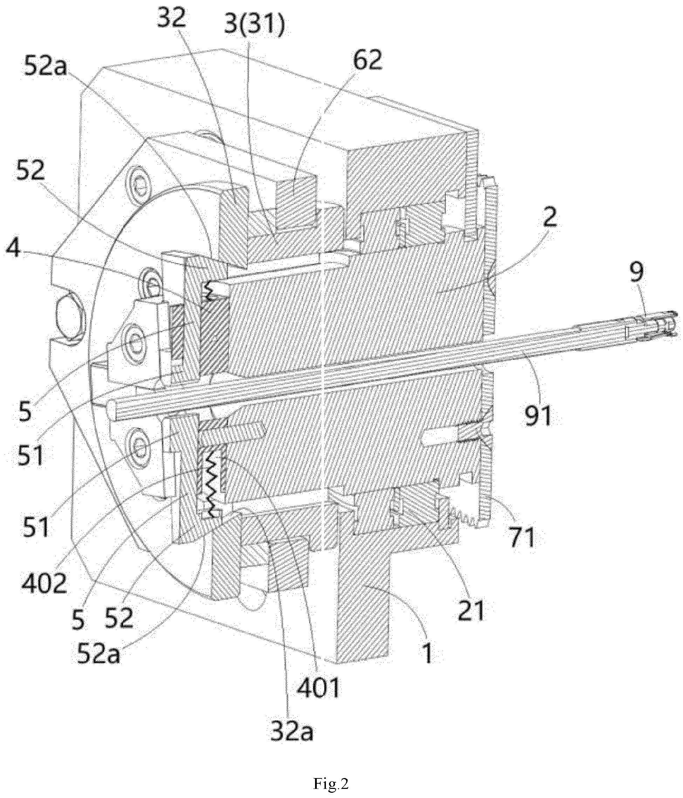

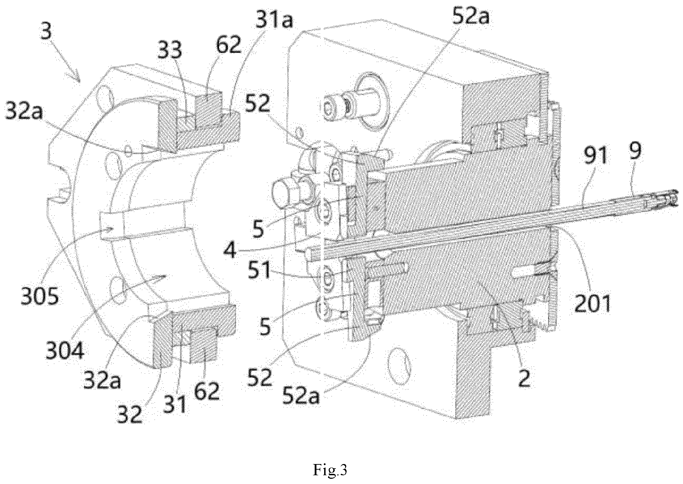

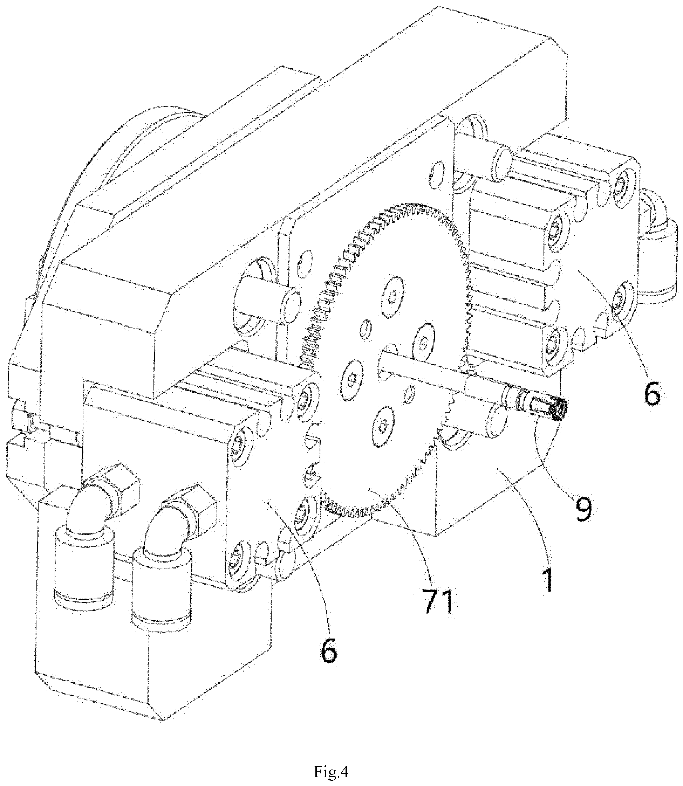

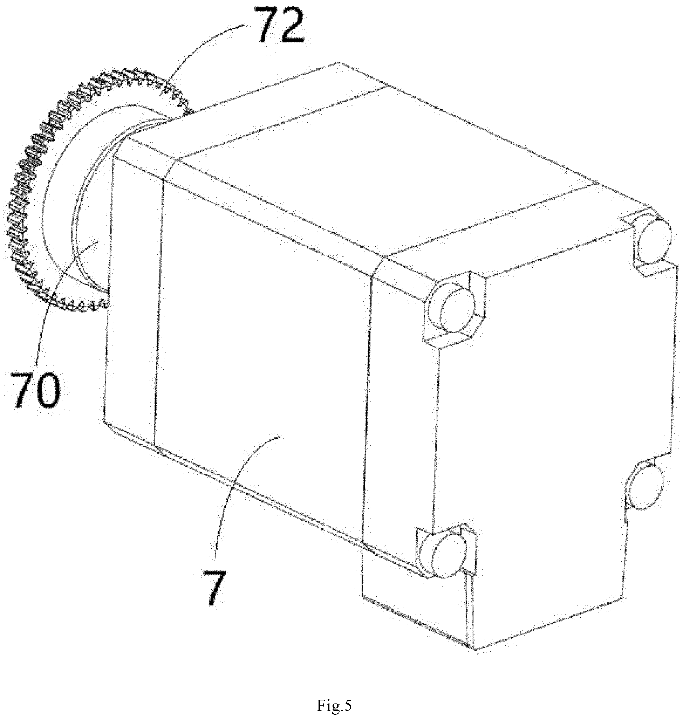

Figure 1 shows an illustrative perspective view of a connector fixture according to an exemplary embodiment of the present invention when viewed from one side; Figure 2 shows an axial sectional view of a connector fixture according to an exemplary embodiment of the present invention; Figure 3 shows an illustrative exploded view of a connector fixture according to an exemplary embodiment of the present invention; Figure 4 shows an illustrative perspective view of a connector fixture according to an exemplary embodiment of the present invention when viewed from the other side; Figure 5 shows an illustrative perspective view of a driving device according to an exemplary embodiment of the present invention.

As shown in Figures 1 to 5, in an exemplary embodiment of the present invention, a connector fixture is disclosed. The connector fixture includes: a fixed seat 1, a rotating shaft 2, a transmission component 3, an installation block 4, multiple clamping jaws 5, and a driving member 62. The rotating shaft 2 passes through the fixed seat 1 and is rotatably installed to the fixed seat 1. The installation block 4 is fixed to the end face of one end of the rotating shaft 2 and formed with multiple radial sliding slots 41 that are spaced in a circumferential direction. Multiple clamping claws 5 are respectively slidably installed in multiple radial sliding slots 41 on installation block 4. The transmission component 3 is installed on the rotating shaft 2 and can be moved axially relative to the rotating shaft 2. The driving member 62 is installed on the transmission component 3 and is used to drive the transmission component 3 to axially move. The transmission component 3 has an installation hole 304, and one end of the rotating shaft 2 is inserted into the installation hole 304. Multiple grooves 305 are formed on the inner wall surface of the installation hole 304, and one ends 52 of the multiple clamping claws 5 are respectively accommodated in multiple grooves 305. A first inclined plane 52a is formed on one end 52 of the clamping claw 5, and a second inclined plane 32a is formed on the inner side of the groove 305. The second inclined plane 32a is mated with the first inclined plane 52a, in order to convert the axial movement of the transmission component 3 into the radial movement of multiple clamping claws 5 to clamp the connector 9 by the multiple clamping claws 5.

As shown in Figures 1 to 5, in the illustrated embodiments, four radial sliding slots 41 are formed on the installation block 4, and the four radial sliding slots 41 are evenly spaced in the circumferential direction, so that the four radial sliding slots 41 form a cross shape. The connector fixture comprises four clamping jaws 5, which are respectively slidably installed in four radial sliding slots 41 for radially clamping the connector 9.

As shown in Figures 1 to 5, in the illustrated embodiments, a central through-hole 201 is formed in the rotating shaft 2 and the installation block 4 that allows the cable 91 of the connector 9 to pass through. The other ends 51 of multiple clamping jaws 5 surround the central through-hole 201 and are adjacent to each other, used for radially clamping the cable 91 of the connector 9.

As shown in Figures 1 to 5, in the illustrated embodiment, the transmission component 3 can be moved between a first position and a second position along the axial direction of the rotating shaft 2 under the drive of the driving member 62. When the transmission component 3 is moved to the first position, multiple clamping jaws 5 are driven to an opened position of releasing the cable 91. When the transmission component 3 is moved to the second position, multiple clamping jaws 5 are driven to a clamping position of clamping the cable 91.

As shown in Figures 1 to 5, in the illustrated embodiments, the connector fixture further includes an elastic element 402, which is compressed between the clamping claw 5 and the installation block 4 to radially push the clamping claw 5 towards the second inclined plane 32a, so that the first inclined plane 52a and the second inclined plane 32a remain in contact with each other. The elastic element 402 can be a coil spring.

As shown in Figures 1 to 5, in the illustrated embodiments, an installation blind hole 401 is formed in the installation block 4, and one end of the elastic element 402 is accommodated in the installation blind hole 401, while the other end of the elastic element 402 is pressed against one end 52 of the clamping claw 5.

As shown in Figures 1 to 5, in the illustrated embodiments, the transmission component 3 is rotationally connected to the driving member 62 to allow the transmission component 3 to rotate relative to the driving member 62.

As shown in Figures 1 to 5, in the illustrated embodiments, the transmission component 3 comprises a sleeve member 31, a ring member 32, and a washer member 33. The sleeve member 31 is installed on one end of the rotating shaft 2. The ring member 32 is connected to the end face of one end of the sleeve member 31. The washer member 33 is fitted onto one end of the sleeve member 31. A limiting flange 31a is formed on the other end of the sleeve member 31, and the driving member 62 is sleeved on the sleeve member 31 and axially limited between the washer member 33 and the limiting flange 31a, and the sleeve member 31 can be rotated relative to the driving member 62.

As shown in Figures 1 to 5, in the illustrated embodiments, the connector fixture further comprises a driver, which is installed on the fixed seat 1 and connected to the driving member 62, for driving the driving member 62 to axially move and driving the transmission component 3 to axially move through the driving member 62.

As shown in Figures 1 to 5, in the illustrated embodiments, the driver can be a cylinder 6, the cylinder body 60 of cylinder 6 is fixed on the fixed seat 1, and the telescopic rod 61 of cylinder 6 is connected to the driving member 62. However, the present invention is not limited to the illustrated embodiments, for example, the driver can also be a hydraulic cylinder or an electric cylinder.

As shown in Figures 1 to 5, in the illustrated embodiments, the connector fixture further comprises a driving device, which is installed on the fixed seat 1 and connected to the other end of the rotating shaft 2, for driving the rotating shaft 2, the installation block 4, the clamping claw 5, and the transmission component 3 to rotate synchronously. In this way, the clamped connector 9 can be rotated to a predetermined orientation.

As shown in Figures 1 to 5, in the illustrated embodiments, the driving device comprises a motor 7 and a transmission mechanism. The transmission mechanism is connected between the output shaft 70 of the motor 7and the rotating shaft 2. In the illustrated embodiment, the transmission mechanism is a gear transmission mechanism. The transmission mechanism includes a first gear 71 and a second gear 72. The first gear 71 is fixed to the other end of the rotating shaft 2. The second gear 72 is fixed to the output shaft 70 of motor 7. The first gear 71 is meshed with the second gear 72.

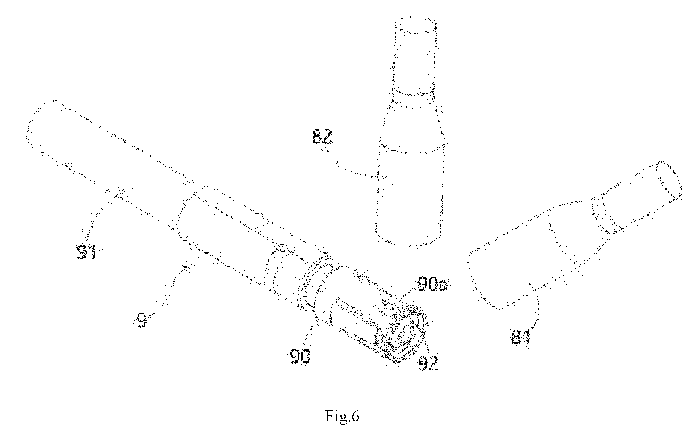

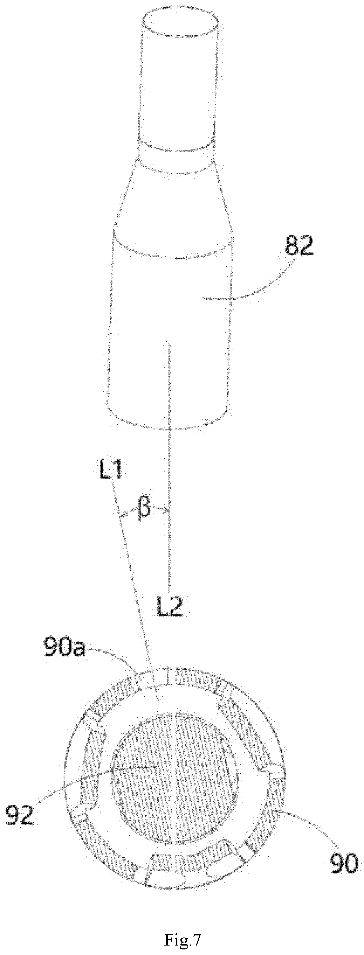

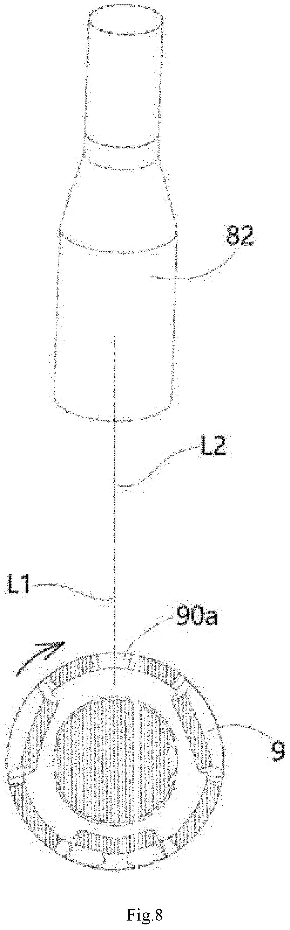

Figure 6 shows an illustrative perspective view of the first camera 81, second camera 82, and connector 9 of a connector detection system according to an exemplary embodiment of the present invention; Figure 7 shows an illustrative view of the second camera 82 and connector 9 of a connector detection system according to an exemplary embodiment of the present invention, where the observation window 90a on the connector is not facing the second camera 82; Figure 8 shows an illustrative view of the second camera 82 and connector 9 of a connector detection system according to an exemplary embodiment of the present invention, wherein the observation window 90a on connector 9 is rotated to face the second camera 82.

As shown in Figures 1 to 8, in another exemplary embodiment of the present invention, a connector detection system is also disclosed. The connector detection system includes: the aforementioned connector fixture, a first camera 81, a second camera 82, a calculation device (not shown), and a control device (not shown). The connector fixture is used to clamp the cable 91 of the detected connector 9. The first camera 81 is used to capture the observation window 90a on the housing 90 of the detected connector 9. The second camera 82 is used to capture the terminal 92 located inside the housing 90 through the observation window 90a. The calculation device calculates the angle β between the central axis L1 of the observation window 90a and the optical axis L2 of the second camera 82 based on the image of the observation window 90a captured by the first camera 81. The control device controls the rotating shaft 2 of the connector fixture to rotate the corresponding angle β calculated by the calculation device, so that the observation window 90a is rotated to an orientation facing the second camera 82. When the observation window 90a on the housing 90 of connector 9 is rotated to the orientation facing the second camera 82, the second camera 82 captures the terminal 92 through the observation window 90a.

As shown in Figures 1 to 8, in the illustrated embodiments, the calculation device also calculates the insertion depth of the terminal 92 inserted into the housing 90 based on the image of the terminal 92 captured by the second camera 82. When the difference between the calculated insertion depth of terminal 92 and a predetermined insertion depth is greater than a predetermined value, the connector detection system determines that the insertion depth of terminal 92 is unqualified. When the difference between the calculated insertion depth of terminal 92 and the predetermined insertion depth is not greater than the predetermined value, the connector detection system determines that the insertion depth of terminal 92 is qualified.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A connector fixture, comprises:
a fixed seat (1);
a rotating shaft (2) which passes through the fixed seat (1) and is rotatably installed on the fixed seat (1);
an installation block (4) which is fixed to one end face of the rotating shaft (2) and formed with multiple radial sliding slots (41) spaced in a circumferential direction;
multiple clamping claws (5) which are respectively slidably installed in multiple radial sliding slots (41) of the installation block (4);
a transmission component (3) which is sleeved on the rotating shaft (2) and can be moved axially relative to the rotating shaft (2); and
a driving member (62) which is sleeved on the transmission component (3) and is used to drive the transmission component (3) to axially move,
wherein the transmission component (3) has an installation hole (304), one end of the rotating shaft (2) is inserted into the installation hole (304), and multiple grooves (305) are formed on the inner wall surface of the installation hole (304), one ends (52) of the multiple clamping jaws (5) are respectively accommodated in the multiple grooves (305),
wherein a first inclined plane (52a) is formed on one end (52) of the clamping claw (5), and a second inclined plane (32a) is formed on the inner side of the groove (305) and is mated with the first inclined plane (52a) to convert an axial movement of the transmission component (3) into a radial movement of multiple clamping claws (5) to clamp a connector (9) by the multiple clamping claws (5).

2. The connector fixture according to claim 1,
wherein four radial sliding slots (41) are formed on the installation block (4), and the four radial sliding slots (41) are evenly spaced in the circumferential direction, so that the four radial sliding slots (41) are in a cross shape;
wherein the connector fixture comprises four clamping claws (5) which are respectively slidably installed in the four radial sliding slots (41) for radially clamping the connector (9).

3. The connector fixture according to claim 1,
wherein a central through-hole (201) is formed in the rotating shaft (2) and the installation block (4) to allow the cable (91) of the connector (9) to pass through, the other ends (51) of the multiple clamping jaws (5) surround the central through-hole (201) and are adjacent to each other, for radially clamping the cable (91) of the connector (9).

4. The connector fixture according to claim 3,
wherein the transmission component (3) can be moved between a first position and a second position along the axial direction of the rotating shaft (2) under the drive of the driving member (62);
wherein when the transmission component (3) is moved to the first position, the multiple clamping claws (5) are driven to an opened position of releasing the cable (91);
wherein when the transmission component (3) is moved to the second position, the multiple clamping jaws (5) are driven to a clamping position for clamping the cable (91).

5. The connector fixture according to claim 4, further comprising:
an elastic element (402) which is compressed between the clamping claw (5) and the installation block (4) to radially push the clamping claw (5) towards the second inclined plane (32a), so that the first inclined plane (52a) and the second inclined plane (32a) remain in contact with each other.

6. The connector fixture according to claim 5,
wherein a blind hole (401) is formed in the installation block (4), one end of the elastic element (402) is accommodated in the blind hole (401), the other end of the elastic element (402) is pressed against one end (52) of the clamping claw (5).

7. The connector fixture according to claim 4,
wherein the transmission component (3) is rotationally connected to the driving member (62) to allow the transmission component (3) to rotate relative to the driving member (62).

8. The connector fixture according to claim 7,
wherein the transmission component (3) comprises:
a sleeve member (31) which is fitted onto one end of the rotating shaft (2);
a ring member (32) connected to one end face of the sleeve member (31); and
a washer member (33) which is fitted onto one end of the sleeve member (31),
wherein a limiting flange (31a) is formed on the other end of the sleeve member (31), and the driving member (62) is sleeved on the sleeve member (31) and axially limited between the washer member (33) and the limiting flange (31a), and the sleeve member (31) can be rotated relative to the driving member (62).

9. The connector fixture according to claim 1, further comprising:
a driver which is installed on the fixed seat (1) and connected to the driving member (62), for driving the driving member (62) to axially move and driving the transmission component (3) to axially move through the driving member (62).

10. The connector fixture according to claim 9,
wherein the driver is a cylinder (6), and the cylinder body (60) of the cylinder (6) is fixed on the fixed seat (1), the telescopic rod (61) of the cylinder (6) is connected to the driving member (62).

11. The connector fixture according to claim 1, further comprising:
a driving device which is installed on the fixed seat (1) and connected to the other end of the rotating shaft (2), for driving the rotating shaft (2), the installation block (4), the clamping claws (5), and the transmission component (3) to rotate synchronously.

12. The connector fixture according to claim 11,
wherein the driving device comprises of:
a motor (7); and
a transmission mechanism which is connected between the rotating shaft (2) and the output shaft (70) of the motor (7).

13. The connector fixture according to claim 12,
wherein the transmission mechanism is a gear transmission mechanism, which comprises of:
a first gear (71) fixed to the other end of the rotating shaft (2); and
a second gear (72) fixed to the output shaft (70) of the motor (7),
wherein the first gear (71) is meshed with the second gear (72).

14. A connector detection system, comprising:
the connector fixture as claimed in any one of claims 1-13, for clamping a cable (91) of a detected connector (9);
a first camera (81) for capturing an observation window (90a) on the housing (90) of the detected connector (9);
a second camera (82) for capturing a terminal (92) located inside the housing (90) through the observation window (90a);
a calculation device for calculating an angle (β) between the central axis (L1) of the observation window (90a) and the optical axis (L2) of the second camera (82) based on the image of the observation window (90a) captured by the first camera (81);
a control device for controlling the rotating shaft (2) of the connector fixture to rotate the angle (β) calculated by the calculation device, so that the observation window (90a) is rotated to an orientation directly facing the second camera (82),
wherein when the observation window (90a) on the housing (90) of the connector (9) is rotated to the orientation directly facing the second camera (82), the second camera (82) captures the terminal (92) through the observation window (90a).

15. The connector detection system according to claim 14,
wherein the calculation device further calculates an insertion depth of the terminal (92) inserted into the housing (90) based on the image captured by the second camera (82);
wherein when the difference between the calculated insertion depth of terminal (92) and a predetermined insertion depth is greater than a predetermined value, the connector detection system determines that the insertion depth of terminal (92) is unqualified;
wherein when the difference between the calculated insertion depth of terminal (92) and the predetermined insertion depth is not greater than the predetermined value, the connector detection system determines that the insertion depth of terminal (92) is qualified.

## Patentansprüche

1. Verbindervorrichtung, die umfasst:
eine stationäre Aufnahme (1);
eine rotierende Welle (2), die durch die stationäre Aufnahme (1) hindurchtritt und drehbar an der stationären Aufnahme (1) installiert ist;
einen Installationsblock (4), der an einer Endfläche der rotierenden Welle (2) befestigt und mit mehreren radialen Gleitschlitzen (41) versehen ist, die in einer Umfangsrichtung beabstandet sind;
mehrere Klemmklauen (5), die jeweils verschiebbar in mehreren radialen Gleitschlitzen (41) des Installationsblocks (4) installiert sind;
eine Übertragungskomponente (3), die auf die rotierende Welle (2) aufgeschoben ist und axial relativ zu der rotierenden Welle (2) bewegt werden kann; sowie
ein Antriebselement (62), das auf die Übertragungskomponente (3) aufgeschoben ist und dazu dient, die Übertragungskomponente (3) zu axialer Bewegung anzutreiben,
wobei die Übertragungskomponente (3) ein Installationsloch (304) aufweist, ein Ende der rotierenden Welle (2) in das Installationsloch (304) eingeführt ist und mehrere Nuten (305) an der Innenwandfläche des Installationslochs (304) ausgebildet sind, wobei Enden (52) an einer Seite der mehreren Klemmklauen (5) jeweils in den mehreren Nuten (305) aufgenommen sind,
wobei eine erste geneigte Ebene (52a) an einem Ende (52) der Klemmklaue (5) ausgebildet ist und eine zweite geneigte Ebene (32a) an der Innenseite der Nut (305) ausgebildet ist und mit der ersten geneigten Ebene (52a) in Eingriff gebracht wird, um eine axiale Bewegung der Übertragungskomponente (3) in eine radiale Bewegung mehrerer Klemmklauen (5) umzuwandeln und einen Verbinder (9) mit den mehreren Klemmklauen (5) festzuklemmen.

2. Verbindervorrichtung nach Anspruch 1,
wobei vier radiale Gleitschlitze (41) an dem Installationsblock (4) ausgebildet sind und die vier radialen Gleitschlitze (41) in der Umfangsrichtung gleichmäßig beabstandet sind, so dass die vier radialen Gleitschlitze (41) eine Kreuzform haben;
wobei die Verbindervorrichtung vier Klemmklauen (5) umfasst, die jeweils verschiebbar in den vier radialen Gleitschlitzen (41) zum radialen Festklemmen des Verbinders (9) installiert sind.

3. Verbindervorrichtung nach Anspruch 1,
wobei ein mittiges Durchgangsloch (201) in der rotierenden Welle (2) und dem Installationsblock (4) ausgebildet ist und das Kabel (91) des Verbinders (9) hindurchtreten lässt, und die anderen Enden (51) der mehreren Klemmklauen (5) das mittige Durchgangsloch (201) umgeben und aneinandergrenzen, um das Kabel (91) des Verbinders (9) radial festzuklemmen.

4. Verbindervorrichtung nach Anspruch 3,
wobei die Übertragungskomponente (3) von dem Antriebselement (62) angetrieben zwischen einer ersten Position und einer zweiten Position in der axialen Richtung der rotierenden Welle (2) bewegt werden kann;
wobei, wenn die Übertragungskomponente (3) an die erste Position bewegt wird, die mehreren Klemmklauen (5) an eine geöffnete Position zum Freigeben des Kabels (91) gedrückt werden;
wobei, wenn die Übertragungskomponente (3) an die zweite Position bewegt wird, die mehreren Klemmklauen (5) an eine Klemmposition zum Festklemmen des Kabels (91) gedrückt werden.

5. Verbindervorrichtung nach Anspruch 4, die des Weiteren umfasst:
ein elastisches Element (402), das zwischen der Klemmklaue (5) und dem Installationsblock (4) zusammengedrückt wird, um die Klemmklaue (5) radial in Richtung der zweiten geneigten Ebene (32a) zu drücken, so dass die erste geneigte Ebene (52a) und die zweite geneigte Ebene (32a) in Kontakt miteinander bleiben.

6. Verbindervorrichtung nach Anspruch 5,
wobei ein Sackloch (401) in dem Installationsblock (4) ausgebildet ist, ein Ende des elastischen Elementes (402) in dem Sackloch (401) aufgenommen ist und das andere Ende des elastischen Elementes (402) an ein Ende (52) der Klemmklaue (5) gepresst wird.

7. Verbindervorrichtung nach Anspruch 4,
wobei die Übertragungskomponente (3) rotierend mit dem Antriebselement (62) verbunden ist, so dass sich die Übertragungskomponente (3) relativ zu dem Antriebselement (62) drehen kann.

8. Verbindervorrichtung nach Anspruch 7,
wobei die Übertragungskomponente (3) umfasst:
ein Buchsenelement (31), das auf ein Ende der rotierenden Welle (2) aufgepasst ist;
ein Ringelement (32), das mit einer Endfläche des Buchsenelementes (31) verbunden ist, sowie
ein Ringscheibenelement (33), das auf ein Ende des Buchsenelementes (31) aufgepasst ist,
wobei ein Begrenzungsflansch (31a) an dem anderen Ende des Buchsenelementes (31) ausgebildet ist und das Antriebselement (62) auf das Buchsenelement (31) aufgeschoben ist und axial zwischen dem Ringscheibenelement (33) und dem Begrenzungsflansch (31a) eingegrenzt ist, und das Buchsenelement (31) relativ zu dem Antriebselement (62) gedreht werden kann.

9. Verbindervorrichtung nach Anspruch 1, die des Weiteren umfasst:
eine Antriebseinrichtung, die an der stationären Aufnahme (1) installiert und mit dem Antriebselement (62) verbunden ist, um das Antriebselement (62) anzutreiben und axial zu bewegen, und die Übertragungskomponente (3) anzutreiben und axial durch das Antriebselement (62) hindurch zu bewegen.

10. Verbindervorrichtung nach Anspruch 9,
wobei die Antriebseinrichtung ein Zylinder (6) ist und der Zylinderkörper (60) des Zylinders (6) an der stationären Aufnahme (1) befestigt ist, wobei die Teleskopstange (61) des Zylinders (6) mit dem Antriebselement (62) verbunden ist.

11. Verbindervorrichtung nach Anspruch 1, die des Weiteren umfasst:
eine Antriebsvorrichtung, die an der stationären Aufnahme (1) installiert und mit dem anderen Ende der rotierenden Welle (2) verbunden ist, um die rotierende Welle (2), den Installationsblock (4), die Klemmklauen (5) und die Übertragungskomponente (3) so anzutreiben, dass sie sich synchron drehen.

12. Verbindervorrichtung nach Anspruch 11,
wobei die Antriebsvorrichtung (11) besteht aus:
einem Motor (7); sowie
einem Übertragungsmechanismus, der mit der rotierenden Welle (2) und der Ausgangswelle (70) des Motors (7) verbunden ist.

13. Verbindervorrichtung nach Anspruch 12,
wobei der Übertragungsmechanismus ein Zahnrad-Übertragungsmechanismus ist, der besteht aus:
einem ersten Zahnrad (71), das an dem anderen Ende der rotierenden Welle (2) befestigt ist; sowie
einem zweiten Zahnrad (72), das an der Ausgangswelle des Motors (7) befestigt ist,
wobei das erste Zahnrad (71) mit dem zweiten Zahnrad (72) kämmt.

14. Verbinder-Erfassungssystem, das umfasst:
die Verbindervorrichtung nach einem der Ansprüche 1 - 13 zum Festklemmen eines Kabels (91) eines erfassten Verbinders (9);
eine erste Kamera (81) zum Aufnehmen eines Überwachungsfensters (90a) an dem Gehäuse (90) des erfassten Verbinders (9);
eine zweite Kamera (82) zum Aufnehmen eines Anschlusses (92), der sich im Inneren des Gehäuses (90) befindet, über das Überwachungsfenster (90a);
eine Berechnungsvorrichtung zum Berechnen eines Winkels (β) zwischen der Mittelachse (L1) des Überwachungsfensters (90a) und der optischen Achse (L2) der zweiten Kamera (82) auf Basis des mit der ersten Kamera (81) aufgenommenen Bildes des Überwachungsfensters (90a);
eine Steuerungsvorrichtung, mit der die rotierende Welle (2) der Verbindervorrichtung so gesteuert wird, dass sie sich um den durch die Berechnungsvorrichtung berechneten Winkel (β) dreht, so dass das Überwachungsfenster (90a) an eine Ausrichtung gedreht wird, an der es der zweiten Kamera (82) direkt zugewandt ist,
wobei, wenn das Überwachungsfenster (90a) an dem Gehäuse (90) des Verbinders (9) an die Ausrichtung gedreht wird, an der es der zweiten Kamera (82) direkt zugewandt ist, die zweite Kamera (82) den Anschluss (92) über das Überwachungsfenster (90a) aufnimmt.

15. Verbinder-Erfassungssystem nach Anspruch 14,
wobei die Berechnungsvorrichtung des Weiteren eine Einführungstiefe des in das Gehäuse (90) eingeführten Anschlusses (92) auf Basis des durch die zweite Kamera (82) aufgenommenen Bildes berechnet;
wobei, wenn die Differenz zwischen der berechneten Einführungstiefe des Anschlusses (92) und einer vorgegebenen Einführungstiefe über einem vorgegebenen Wert liegt, das Verbinder-Erfassungssystem feststellt, dass die Einführungstiefe des Anschlusses (92) ungeeignet ist;
wobei, wenn die Differenz zwischen der berechneten Einführungstiefe des Anschlusses (92) und der vorgegebenen Einführungstiefe nicht über dem vorgegebenen Wert liegt, das Verbinder-Erfassungssystem feststellt, dass die Einführungstiefe des Anschlusses (92) geeignet ist.

## Revendications

1. Fixation de connecteur, comprenant :
un siège fixe (1) ;
un arbre rotatif (2) qui traverse le siège fixe (1) et est installé en rotation sur le siège fixe (1) ;
un bloc d'installation (4) qui est fixé à une face d'extrémité de l'arbre rotatif (2) et formé avec de multiples fentes coulissantes radiales (41) espacées dans une direction circonférentielle ;
de multiples griffes de serrage (5) qui sont respectivement installées en coulissement dans de multiples fentes coulissantes radiales (41) du bloc d'installation (4) ;
un composant de transmission (3) qui est emmanché sur l'arbre rotatif (2) et peut être déplacé axialement par rapport à l'arbre rotatif (2) ; et
un élément d'entraînement (62) qui est emmanché sur le composant de transmission (3) et est utilisé pour entraîner le composant de transmission (3) à se déplacer axialement,
dans laquelle le composant de transmission (3) a un trou d'installation (304), une extrémité de l'arbre rotatif (2) est insérée dans le trou d'installation (304), et de multiples rainures (305) sont formées sur la surface de paroi interne du trou d'installation (304), des extrémités (52) des multiples mâchoires de serrage (5) sont respectivement logées dans les multiples rainures (305),
dans laquelle un premier plan incliné (52a) est formé sur une extrémité (52) de la griffe de serrage (5), et un second plan incliné (32a) est formé sur le côté intérieur de la rainure (305) et est accouplé avec le premier plan incliné (52a) pour convertir un mouvement axial du composant de transmission (3) en un mouvement radial de multiples griffes de serrage (5) afin de serrer un connecteur (9) par les multiples griffes de serrage (5).

2. Fixation de connecteur selon la revendication 1,
dans laquelle quatre fentes coulissantes radiales (41) sont formées sur le bloc d'installation (4), et les quatre fentes coulissantes radiales (41) sont espacées de manière uniforme dans la direction circonférentielle, de sorte que les quatre fentes coulissantes radiales (41) soient en forme de croix ;
dans laquelle la fixation de connecteur comprend quatre griffes de serrage (5) qui sont respectivement installées en coulissement dans les quatre fentes coulissantes radiales (41) pour serrer radialement le connecteur (9).

3. Fixation de connecteur selon la revendication 1,
dans laquelle un trou traversant central (201) est formé dans l'arbre rotatif (2) et le bloc d'installation (4) pour permettre le passage du câble (91) du connecteur (9), les autres extrémités (51) des multiples mâchoires de serrage (5) entourent le trou traversant central (201) et sont adjacentes les unes aux autres, pour serrer radialement le câble (91) du connecteur (9).

4. Fixation de connecteur selon la revendication 3,
dans laquelle le composant de transmission (3) peut être déplacé entre une première position et une seconde position le long de la direction axiale de l'arbre rotatif (2) sous l'entraînement de l'élément d'entraînement (62) ;
dans laquelle, lorsque le composant de transmission (3) est déplacé vers la première position, les multiples mâchoires de serrage (5) sont entraînées vers une position ouverte de libération du câble (91) ;
dans laquelle, lorsque le composant de transmission (3) est déplacé vers la seconde position, les multiples griffes de serrage (5) sont entraînées vers une position de serrage pour serrer le câble (91).

5. Fixation de connecteur selon la revendication 4, comprenant en outre :
un élément élastique (402) qui est comprimé entre la griffe de serrage (5) et le bloc d'installation (4) pour pousser radialement la griffe de serrage (5) vers le second plan incliné (32a), de sorte que le premier plan incliné (52a) et le second plan incliné (32a) restent en contact l'un avec l'autre.

6. Fixation de connecteur selon la revendication 5,
dans laquelle un trou borgne (401) est formé dans le bloc d'installation (4), une extrémité de l'élément élastique (402) est logée dans le trou borgne (401), l'autre extrémité de l'élément élastique (402) est pressée contre une extrémité (52) de la griffe de serrage (5).

7. Fixation de connecteur selon la revendication 4,
dans laquelle le composant de transmission (3) est relié en rotation à l'élément d'entraînement (62) pour permettre au composant de transmission (3) de tourner par rapport à l'élément d'entraînement (62).

8. Fixation de connecteur selon la revendication 7,
dans laquelle le composant de transmission (3) comprend :
un élément manchon (31) qui est monté sur une extrémité de l'arbre rotatif (2) ;
un élément annulaire (32) relié à une face d'extrémité de l'élément manchon (31) ; et
un élément rondelle (33) qui est monté sur une extrémité de l'élément manchon (31),
dans laquelle une bride de limitation (31a) est formée sur l'autre extrémité de l'élément manchon (31), et l'élément d'entraînement (62) est emmanché sur l'élément manchon (31) et limité axialement entre l'élément rondelle (33) et la bride de limitation (31a), et l'élément manchon (31) peut tourner par rapport à l'élément d'entraînement (62).

9. Fixation de connecteur selon la revendication 1, comprenant en outre :
un organe d'entraînement qui est installé sur le siège fixe (1) et relié à l'élément d'entraînement (62), pour entraîner l'élément d'entraînement (62) à se déplacer axialement et entraîner le composant de transmission (3) à se déplacer axialement par l'intermédiaire de l'élément d'entraînement (62).

10. Fixation de connecteur selon la revendication 9,
dans laquelle l'organe d'entraînement est un vérin (6), et le corps de vérin (60) du vérin (6) est fixé sur le siège fixe (1), la tige télescopique (61) du vérin (6) est reliée à l'élément d'entraînement (62).

11. Fixation de connecteur selon la revendication 1, comprenant en outre :
un dispositif d'entraînement qui est installé sur le siège fixe (1) et relié à l'autre extrémité de l'arbre rotatif (2), pour entraîner l'arbre rotatif (2), le bloc d'installation (4), les griffes de serrage (5) et le composant de transmission (3) à tourner de manière synchrone.

12. Fixation de connecteur selon la revendication 11,
dans laquelle le dispositif d'entraînement comprend :
un moteur (7) ; et
un mécanisme de transmission qui est relié entre l'arbre rotatif (2) et l'arbre de sortie (70) du moteur (7).

13. Fixation de connecteur selon la revendication 12,
dans laquelle le mécanisme de transmission est un mécanisme de transmission à engrenages, qui comprend :
un premier engrenage (71) fixé à l'autre extrémité de l'arbre rotatif (2) ; et
un second engrenage (72) fixé à l'arbre de sortie (70) du moteur (7),
dans laquelle le premier engrenage (71) est engrené avec le second engrenage (72).

14. Système de détection de connecteur, comprenant :
la fixation de connecteur selon l'une quelconque des revendications 1 à 13, pour serrer un câble (91) d'un connecteur détecté (9) ;
une première caméra (81) pour capturer une fenêtre d'observation (90a) sur le boîtier (90) du connecteur détecté (9) ;
une seconde caméra (82) pour capturer une borne (92) située à l'intérieur du boîtier (90) à travers la fenêtre d'observation (90a) ;
un dispositif de calcul pour calculer un angle (β) entre l'axe central (L1) de la fenêtre d'observation (90a) et l'axe optique (L2) de la seconde caméra (82) sur la base de l'image de la fenêtre d'observation (90a) capturée par la première caméra (81) ;
un dispositif de commande pour commander l'arbre rotatif (2) de la fixation de connecteur afin de faire tourner l'angle (β) calculé par le dispositif de calcul, de sorte que la fenêtre d'observation (90a) soit tournée vers une orientation faisant face directement à la seconde caméra (82),
dans lequel, lorsque la fenêtre d'observation (90a) sur le boîtier (90) du connecteur (9) est tournée vers l'orientation faisant face directement à la seconde caméra (82), la seconde caméra (82) capture la borne (92) à travers la fenêtre d'observation (90a).

15. Système de détection de connecteur selon la revendication 14,
dans lequel le dispositif de calcul calcule en outre une profondeur d'insertion de la borne (92) insérée dans le boîtier (90) sur la base de l'image capturée par la seconde caméra (82) ;
dans lequel, lorsque la différence entre la profondeur d'insertion calculée de la borne (92) et une profondeur d'insertion prédéterminée est supérieure à une valeur prédéterminée, le système de détection de connecteur détermine que la profondeur d'insertion de la borne (92) n'est pas conforme ;
dans lequel, lorsque la différence entre la profondeur d'insertion calculée de la borne (92) et la profondeur d'insertion prédéterminée n'est pas supérieure à la valeur prédéterminée, le système de détection de connecteur détermine que la profondeur d'insertion de la borne (92) est conforme.
